# EUROPEAN PATENT APPLICATION

(11) **EP 4 834 585 A1**
(43) Date of publication of application: **04.11.2026**
(21) Application number: 24913407.3
(22) Date of filing: 26.12.2024
(51) Int. Cl.: B32B 33/00, B32B 27/08, C09D 5/28, C09D 133/04, C09D 4/00, B32B 27/16

(54) **DECORATIVE FILM AND METHOD OF MANUFACTURING SAME**

(30) Priority: 26.12.2023 KR 20230190979
(71) Applicant: LX Hausys, Ltd., Seoul 04637 (KR)
(72) Inventor: KIM, Da Sol, Seoul 07796 (KR); KIM, Chaehoon, Seoul 07796 (KR); LEE, Bobin, Seoul 07796 (KR)
(74) Representative: Goddar, Heinz J.
(86) International application number: PCT/KR2024/021142
(87) International publication number: WO 2025/143800

(57) **Abstract**

The present specification relates to a decorative film including a base material and a cured layer on the base material, wherein a surface of the cured layer has a dense wrinkle shape, and the cured layer has an Rz of 5 µm or less, an Ra of 1 µm or less, and an Rz/Ra of 5 to 20, and a method for manufacturing the decorative film.

## Description

### [Technical Field]

This application claims priority to and the benefit of Korean Patent Application No. 10-2023-0190979 filed in the Korean Intellectual Property Office on December 26, 2023, the entire contents of which are incorporated herein by reference.

The present invention relates to a decorative film and a method for manufacturing the same.

### [Background Art]

The most readily encountered factor for consumers when purchasing furniture is surface properties. Among these, surface tactile properties are the most basic physical properties that customers can directly perceive and confirm, and thus are also very important factors in improving customer satisfaction with a product.

However, heretofore, since surface tactile properties have depended on the composition of a treatment agent, development of a new treatment agent has been necessary in order to obtain a surface having a desired tactile property. Additionally, newly developed treatment agents have physical properties different from those of existing products, making it difficult to replace the existing products.

To address such difficulty in changing tactile properties, a method is proposed for varying surface tactile properties while maintaining existing physical properties.

Decorative sheets with matte properties (or low-gloss properties) are widely used in the manufacture of films for building interior materials or furniture. For example, in the related art, a technique has been used for manufacturing a decorative sheet with matte properties by applying a coating treatment agent containing a matting agent (e.g., silica) onto a base material and then curing the coating treatment agent.

With respect to implementation of matte properties of decorative sheets, since a typical matting agent is porous and has a low apparent specific gravity, the matting agent is located in a surface layer of a coating, which leads to deterioration in stain resistance of the decorative sheet, such as an increase in surface adsorption of foreign substances (for example, fine dust, moisture, and grease).

Recently, in line with a trend toward higher-end decorative sheets, demand is also increasing for decorative sheets having a surface with a soft tactile property in addition to matte properties.

There is a need to develop a decorative sheet that has stain resistance equal to or greater than those of products of the related art and can provide excellent tactile and matte properties.

### [Detailed Description of the Invention]

### [Technical Problem]

The present invention has been made in an effort to provide a decorative film capable of achieving excellent tactile and matte properties, and a method for manufacturing the same.

### [Technical Solution]

[1] An exemplary embodiment of the present specification provides a decorative film including a base material and a cured layer having a surface structure including a wrinkle, on the base material, wherein the cured layer has an Rz of 5 µm or less, an Ra of 1 µm or less, and an Rz/Ra of 5 to 20.
[2] In another exemplary embodiment of the present specification, the cured layer has a surface gloss of 15 or less under a 60° gloss condition, and a surface gloss of 20 or more under an 85° gloss condition.
[3] In another exemplary embodiment of the present specification, the cured layer may include 5 to 100 wrinkles per unit area (0.1 mm × 0.1 mm) of a surface.
[4] An exemplary embodiment of the present specification provides a method for manufacturing a decorative film, the method including: a first light irradiation step of irradiating an acrylic resin composition coated on a base material with light having a wavelength of 200 nm to 400 nm under an air condition to cure a surface of the composition, a second light irradiation step of irradiating a surface of the surface-cured composition with light having a wavelength of 200 nm or less under an inert gas condition to induce wrinkles on the surface, and a third light irradiation step of irradiating the composition having the wrinkles induced on the surface thereof with light having a wavelength of 200 nm to 400 nm to photocure the composition to form a cured layer, wherein the cured layer has an Rz of 5 µm or less, an Ra of 1 µm or less, and an Ra/Rz of 5 to 20.
[5] In another exemplary embodiment of the present specification, the acrylic resin composition includes 20 to 50 parts by weight of a monofunctional acrylic monomer and 40 parts by weight or more and less than 70 parts by weight of a polyfunctional acrylic oligomer.
[6] In another exemplary embodiment of the present specification, the acrylic resin composition further includes at least one of 5 to 30 parts by weight of a polyfunctional acrylic monomer, and 2 parts by weight or more and 10 parts by weight or less of a silicon-based acrylic oligomer.

### [Advantageous Effects]

A decorative film of an exemplary embodiment of the present specification can achieve smooth tactile properties while maintaining matte properties.

In a decorative film of another exemplary embodiment of the present specification, moistness (wetness) among surface tactile properties can be controlled while maintaining main physical properties.

### [Brief Description of Drawings]

FIG. 1 is a structural diagram illustrating an example of a photocuring apparatus used in the manufacture of a cured layer according to an exemplary embodiment of the present invention.
FIG. 2 is a scanning electron microscope (SEM) image of a surface of a sample prepared in Example 3.
FIG. 3 is a scanning electron microscope (SEM) image of a surface of a sample prepared in Comparative Example 3.
FIG. 4 is a scanning electron microscope (SEM) image of a surface of a sample prepared in Example 5.
FIG. 5 is a scanning electron microscope (SEM) image of a surface of a sample prepared in Comparative Example 5.

### <Explanation of Reference Numerals and Symbols>

- 100:: photocuring apparatus
- 110:: light irradiation chamber
- 111:: first light irradiator (UV irradiator)
- 112:: second light irradiator (UV irradiator)
- 113:: third light irradiator (UV irradiator)
- 120:: irradiated light
- 130:: conveyor belt
- 140:: gas barrier
- 150:: specimen

### [Best Mode]

The present invention will be described in detail below.

The present invention may be variously modified and may have various exemplary embodiments, and specific exemplary embodiments will be illustrated in the drawings and described in detail in the following description.

However, it should be understood that the description of the exemplary embodiments is not intended to limit the present invention to the specific exemplary embodiments, and that the present invention is to cover all modifications, equivalents and alternatives falling within the spirit and technical scope of the present invention.

In the present application, it should be understood that terms such as "including (comprising)" and "having" are intended to designate the existence of characteristics, numbers, steps, operations, constituent elements, and components described in the specification or a combination thereof, and do not exclude a possibility of the existence or addition of one or more other characteristics, numbers, steps, operations, constituent elements, and components, or a combination thereof in advance.

In addition, the accompanying drawings should be understood as being illustrated in an enlarged or reduced manner for convenience of description.

Hereinafter, the present invention will be described in detail with reference to the drawings, and components identical to or corresponding to each other regardless of reference numerals will be assigned the same reference numerals, and duplicate descriptions thereof will be omitted.

In the present invention, "molecular weight" refers to a "weight average molecular weight" of a polymer, and the weight average molecular weight may be a value measured by gel permeation chromatography (GPC). In this case, a unit of the molecular weight is g/mol, and may be omitted.

In the present invention, "surface profile" refers to a degree of fine irregularities on a surface and may be expressed by "Ra" and "Rz." Here, "Ra" is an arithmetic average roughness, and "Rz" represents a deviation obtained by taking a reference length L on a cross-sectional curve of the surface and measuring distances between the peaks from the highest to the fifth highest and the valleys from the deepest to the fifth deepest of an irregular structure, and is also referred to as "ten point average roughness."

The present invention relates to a decorative film capable of achieving excellent tactile and matte properties, and a method for manufacturing the same.

A decorative film of the present invention includes a base material and a coating layer on the base material, wherein the coating layer has an Rz of 5 µm or less, an Ra of 1 µm or less, and an Rz/Ra of 5 to 20.

Rz is greater than 0 µm, 0.5 µm or more, or 1 µm or more, and is 5 µm or less, 4 µm or less, or 3 µm or less.

Ra is greater than 0 µm, 0.1 µm or more, or 0.2 µm or more, and is 1 µm or less, 0.9 µm or less, 0.8 µm or less, 0.7 µm or less, 0.6 µm or less, 0.5 µm or less, or 0.4 µm or less.

Rz/Ra is 20 or less, 19 or less, 18 or less, 17 or less, 16 or less, 15 or less, 14 or less, 13 or less, 12 or less, 11 or less, 10 or less, 9 or less, or 8 or less, and is 5 or more, 6 or more, or 7 or more.

In the present invention, Rz and Ra are parameters for representing properties of wrinkles that affect tactile properties, and indicate that, while a dense wrinkle structure is provided to achieve matte properties, roughness is not unpleasant and wetness is perceived. A surface that achieves such tactile properties while maintaining matte properties is required to reduce both Rz and Ra values overall, and, in particular, Ra value decreases to a greater extent, thereby indicating that the Rz/Ra value increases compared to the related art.

As another example, the decorative film according to an exemplary embodiment of the present invention may induce scattering of light incident on the surface through a radial irregular structure formed on the surface of the cured layer, thereby achieving significantly low gloss even with a very small amount of a matting agent in the cured layer or, in some cases, even without using a matting agent. Specifically, the decorative film may have a surface gloss of 15 or less as measured at 60° using a gloss meter (60° gloss condition), and more specifically, an upper limit thereof may be 14 or less, 13 or less, 12 or less, 11 or less, 10 or less, 9 or less, 8 or less, 7 or less, 6 or less, 5 or less, 4.5 or less, 4 or less, 3.5 or less, 3 or less, 2.5 or less, or 2.3 or less, and a lower limit thereof may be 0.1 or more, 0.5 or more, 1 or more, or 1.1 or more, or 2 or more.

The decorative film may have a surface gloss of 20 or more as measured at 85° using a gloss meter (85° gloss condition) , and more specifically, a lower limit thereof may be 21 or more, 22 or more, 23 or more, 24 or more, 25 or more, 26 or more, 27 or more, 28 or more, 29 or more, 30 or more, 31 or more, 32 or more, 33 or more, 34 or more, or 35 or more, and an upper limit thereof may be 60 or less, 55 or less, or 50 or less.

In general, both 60° gloss and 85° gloss are low. In such cases, tactile properties of the surface become rough, and a bumpy surface is often visible to the naked eye. On the other hand, when 85° gloss increases while 60° gloss is 15 or less, the surface appears matte to the naked eye, while the tactile properties become smoother compared to those of a surface having an 85° gloss of less than 20.

A decorative film of the present invention can improve matte gloss and tactile properties by introducing a fine wrinkle structure into a surface structure of the cured layer.

Here, a "wrinkled surface" means that the resin layer includes wrinkles on at least one surface thereof and has three-dimensional surface irregularities due to the wrinkles. For example, the surface has irregularities including large and small ridges, valleys, and wrinkles formed therefrom that can be visually recognized in a predetermined shape. Each of the ridges, valleys, and wrinkles may have a regular or irregular shape. Such a wrinkled surface may also be referred to as a surface having a fine folding structure.

When a wrinkled surface of a resin layer is observed in a direction normal to the resin layer, ridges, valleys, wrinkles, and irregularities formed therefrom are observed over the entire region of the surface, for example, while undergoing a curing process described below.

The wrinkles may be observed in a form including a line shape having directionality (for example, a straight line and a curved line). For example, wrinkles on the surface formed by repeated straight and curved shapes may provide the surface of the resin layer with undulations like a mountain range. The surface irregularity structure formed by wrinkles having a line shape is clearly distinguishable from a so-called point-wise irregularity shape formed by using particles in a composition for forming a resin layer or by employing an emulsion dispersion method.

In addition, the cured layer may include wrinkles that can be visually recognized in a predetermined size and shape. For example, the wrinkles may have a linear shape (a straight line or a curved line) having a width from a nanometer (nm) level (less than about 1 µm) and extending several micrometers (µm) or more. A width and/or a height of the wrinkles and a length over which the wrinkles extend may be determined from an image (for example, SEM) of a wrinkled surface, as shown in the accompanying drawings. In addition, the length in the extension direction may be greater than the width. Specifically, ends of wrinkles extending in the straight or curved shape may be incorporated into the resin layer while forming an inclination in which the height gradually decreases. In some cases, the end of one wrinkle having the above-described size and shape may become a starting point of another wrinkle or a connection point with another wrinkle. In addition, when a cross-sectional curve near the wrinkles is observed in a direction perpendicular to an extension direction of the wrinkles, the width of the wrinkles may be incorporated into the resin layer while forming an inclination in which the height gradually decreases in both directions from a point or portion (for example, a ridge) forming the height of the wrinkles. Note that, when a ridge and a valley adjacent thereto form a wrinkle or a portion thereof, a region of a shape, which is visually recognized including the valley, may be seen as the width of the wrinkle.

For example, the width of the wrinkle may be 9 µm or less. Specifically, the width of the wrinkle may have an upper limit of 8 µm or less, 7 µm or less, 6 µm or less, 5 µm or less, 4 µm or less, or 3 µm or less, and a lower limit of 150 nm or more, 200 nm or more, 250 nm or more, or 300 nm or more. When the above range is satisfied, the wrinkled surface may be advantageous for exhibiting matte properties and excellent tactile properties.

In addition, the length over which the wrinkles extend may have an upper limit of 100 µm or less, 90 µm or less, 80 µm or less, 70 µm, 60 µm or less, 50 µm or less, 40 µm or less, or 30 µm or less, and a lower limit of 1 µm or more, 2 µm or more, 3 µm or more, 4 µm or more, or 5 µm or more. When the above range is satisfied, the wrinkled surface may be advantageous for exhibiting matte properties and excellent tactile properties.

The wrinkles may have a predetermined height over most of the length over which they extend. For example, the wrinkles may have a height of 5 µm or less, 4 µm or less, 3 µm or less, 2 µm or less, 1.5 µm or less, 1.0 µm or less, or 0.1 to 0.9 µm, which may be regarded as corresponding to the "surface profile" of the cured layer. Specifically, when a cross-sectional curve of the wrinkles is observed in a direction perpendicular to an extension direction of the wrinkles, a point or portion (for example, a ridge) forming the height of the wrinkles and a point or portion (for example, a valley) of the resin layer into which the width of the wrinkles is incorporated may have a height difference or surface profile of 2 µm or less. The present invention can prevent a reduction in stain resistance caused by contaminants remaining between the wrinkles due to thick wrinkles by controlling the height or surface profile of the wrinkles to the above range.

Note that, the phrase "most of a length in which a height is observed" refers to a length of 70% or more, 75% or more, 80% or more, 85% or more, or 90% or more, or 95% or more of a length over which the wrinkle continuously extends along its shape. When the height difference gradually decreases in the extension direction of the wrinkles and the height becomes significantly lower, a shape in which end portions of the wrinkles are incorporated into the resin layer may be observed, or a shape in which contact with other wrinkles different in size or shape begins may be observed. In the latter case, a more complex wrinkle structure may form surface irregularities.

The wrinkles may be observed over the entire region of the surface, and may form surface wrinkles or irregularities while exhibiting a regular or irregular distribution. For example, on the surface, the wrinkles may form surface irregularities while having a shape in which a plurality of wrinkles branch in different directions from a single identifiable point. Specifically, on the surface, the wrinkles may have shapes similar to "Y" or "〈". In this case, the wrinkles having shapes similar to "Y" or "〈" may be densely arranged to form surface irregularities.

The present invention can increase frequency of finer wrinkles by forming wrinkles having the above-described shapes and/or sizes on the cured layer, thereby lowering gloss without using a matting agent or by using even a small amount of a matting agent in the cured layer, can prevent surface staining due to contaminants remaining between the wrinkles, and can improve wax affinity of the surface.

As an example, the decorative film may include 5 to 200 wrinkles per unit area (0.1 mm × 0.1 mm) (which is equivalent to 500 to 20,000 wrinkles per 1 mm × 1 mm) of the surface of the cured layer. Specifically, on the surface of the cured layer of the decorative film, there may be 5 to 180 wrinkles, 5 to 150 wrinkles, 5 to 120 wrinkles, 5 to 100 wrinkles, 5 to 80 wrinkles, 5 to 70 wrinkles, 5 to 60 wrinkles, 5 to 50 wrinkles, 7 to 200 wrinkles, 10 to 200 wrinkles, 12 to 200 wrinkles, 15 to 200 wrinkles, 18 to 200 wrinkles, 8 to 100 wrinkles, 10 to 80 wrinkles, 12 to 70 wrinkles, or 14 to 60 wrinkles per unit area (0.1 mm × 0.1 mm).

In a specific example of the present application, the cured layer having the characteristics may be obtained by curing a composition having a predetermined composition. Specifically, the cured layer may include a cured product of a curable composition.

In an example, a treatment agent used in the present application, i.e., a coating composition, may be a photocurable solvent-free composition. That is, the composition may not contain a solvent, for example, an organic solvent, an aqueous solvent, or the like. When the solvent-free composition is used, a drying process for a solvent may be omitted, leading to an increase in process efficiency. In addition, when the solvent-free composition is used, deterioration of surface properties required for the film of the present application due to bubbles generated as a solvent volatilizes during a solvent drying process may be prevented. Specifically, the composition may be a UV-curable solvent-free composition and may include a reactive component (a photocurable component) having a curable reactive group.

In an example, the cured layer may include a cured product of a composition including an oligomer component (A) and a monomer component (B). That is, after a photocuring treatment as described below is performed on a resin composition having a predetermined composition, a cured layer having surface with wrinkles formed as described above may be manufactured.

The oligomer component (A) may include a polyfunctional acrylic oligomer, and the monomer component (B) may include a monofunctional acrylic monomer. In this case, the number of functional groups refers to the number of substituent groups capable of participating in an initiation reaction, wherein monofunctional has one functional group, and polyfunctional may be difunctional, trifunctional, tetrafunctional, pentafunctional, or hexafunctional or more.

The acrylic resin composition may include 20 to 50 parts by weight of a monofunctional acrylic monomer and 40 parts by weight or more and less than 70 parts by weight of a polyfunctional acrylic oligomer.

The oligomer component (A) may further include a silicon-based acrylic oligomer. When the silicon-based acrylic oligomer is included, it may be included in an amount of 5 to 30 parts by weight or 2 parts by weight or more and 10 parts by weight or less.

The monomer component (B) may further include a polyfunctional acrylic monomer. When the polyfunctional acrylic monomer is included, it may be included in an amount of 5 to 30 parts by weight or 10 to 30 parts by weight.

The composition may further include an initiator (C). The type of initiator is not particularly limited as long as it can be used in a curing process described below, and a commercially available product may also be used.

A content of the initiator is not particularly limited. For example, the composition may include 10 parts by weight or less of the initiator, based on a total of 100 parts by weight of the oligomer component (A) and the monomer component (B). Specifically, the content of the initiator may be 5 parts by weight or less, 4 parts by weight or less, 3 parts by weight or less, 2 parts by weight or less, or 1 part by weight or less. A lower limit of the content may be, for example, 0.1 parts by weight or more or 0.5 parts by weight or more. As described below, in the present application, since stepwise curing is performed when curing the cured layer, curing efficiency is excellent even when a small amount of the initiator is used.

The composition may further include a light stabilizer (D). The type of light stabilizer is not particularly limited as long as it can be used in a curing process described below, and a commercially available product may also be used.

A content of the light stabilizer is not particularly limited. For example, the composition may include 10 parts by weight or less of the light stabilizer, based on a total of 100 parts by weight of the oligomer component (A) and the monomer component (B). Specifically, the content of the light stabilizer may be 5 parts by weight or less, 4 parts by weight or less, 3 parts by weight or less, 2 parts by weight or less, or 1 part by weight or less. A lower limit of the content may be, for example, 0.1 parts by weight or 0.5 parts by weight. The light stabilizer can prevent damage to a laminated film caused by ultraviolet rays.

The acrylic resin composition may further include a silicon-based additive or a matting agent. When a sum of the oligomer component (A) and the monomer component (B) is 100 parts by weight, a content of the silicon-based additive may be 0 phr or more and 5 phr or less. Since the amounts are expressed overall as a weight ratio in parts by weight, phr may be replaced with parts by weight.

The acrylic resin composition may not include a matting agent or may include the matting agent in a small amount.

Specifically, the matting agent, which has a particulate form, may impart a matte effect to the film by increasing a scattering rate of light at the surface of the film. However, use of the matting agent reduces stain resistance as described above. However, since the cured layer of the present application has the surface characteristics described above, matte properties can be effectively achieved. Therefore, sufficient matte properties can be achieved in the film of the present application even without using a matting agent used in the related art to achieve a matte effect.

In addition, even when a matting agent is used, the matting agent may be used in an amount smaller than that used in the related art to achieve matte properties. That is, according to the present application, the amount of the matting agent used can be significantly reduced. For example, the composition may include a matting agent component in an amount of 5 parts by weight or less, specifically 4 parts by weight or less, 3 parts by weight or less, 2 parts by weight or less, or 1 part by weight, based on a total of 100 parts by weight of the oligomer component (A) and the monomer component (B). Accordingly, the film of the present application can prevent problems such as reduction in stain resistance due to use of the matting agent.

A thickness of the cured layer is not particularly limited as long as the surface characteristics described above are satisfied. For example, the thickness of the cured layer may be 3 µm or more, 5 µm or more, 10 µm or more, or 15 µm or more, provided that the surface characteristics described above are satisfied. Additionally, the thickness of the cured layer may be 100 µm or less, 90 µm or less, 80 µm or less, 70 µm or less, 60 µm or less, 50 µm or less, 40 µm or less, 30 µm or less, 20 µm or less, or 15 µm or less, for example.

A type of base material layer to which the above composition is directly applied is not particularly limited. For example, the base material layer may include polyvinyl chloride (PVC) or polyethylene terephthalate (PET). Although not particularly limited, in view of suppression of whitening, mechanical properties such as impact resistance, ease of processing, and chemical resistance, it may be preferable to use glycol-modified polyethylene terephthalate (PETG) among polyethylene terephthalate (PET).

A thickness of the base material layer is also not particularly limited. For example, the thickness of the base material layer may be 50 µm or more, 100 µm or more, 150 µm or more, 200 µm or more, 250 µm or more, 300 µm or more, 350 µm or more, 400 µm or more, 450 µm or more, or 500 µm or more. Additionally, the thickness of the base material layer may be 3,000 µm or less, 2,000 µm or less, 1,000 µm or less, 900 µm or less, 800 µm or less, 700 µm or less, 600 µm or less, 500 µm or less, 400 µm or less, or 300 µm or less, for example.

In addition, a method of applying a composition onto a base material may be performed by a method known in the art, and may, for example, be performed using a Mayer rod, a D-bar, a rubber roll, a G/V roll, an air knife, a slot die, a micro gravure, or the like.

A three-step curing method for curing the cured layer may include: a first light irradiation step of irradiating an acrylic resin composition coated on a base material with light having a wavelength of 200 nm to 400 nm under an air condition to cure a surface of the composition, a second light irradiation step of irradiating a surface of the surface-cured composition with light having a wavelength of 200 nm or less under an inert gas condition to induce wrinkles on the surface, and a third light irradiation step of irradiating the composition having the wrinkles induced on the surface thereof with light having a wavelength of 200 nm to 400 nm to photocure the composition to form a cured layer.

A method for manufacturing a decorative film according to an exemplary embodiment of the present invention includes a step of curing an acrylic resin composition by irradiating the acrylic resin composition with short-wavelength light within a specific range in three stages under different conditions. Here, "short wavelength" is a term distinguished from "long wavelength," and refers to a wavelength having high energy and a short wavelength, and refers to UV, X-ray, and the like, which have wavelengths shorter than that of blue light in the visible spectrum, and refers to light having a wavelength of 400 nm or less, and further, light having a wavelength of 100 nm to 450 nm. This is a term different from "narrow wavelength band" and "broad wavelength band," which are distinguished based on a range of an emission spectrum of a light source described below.

Specifically, the first light irradiation step is a first step of irradiating an acrylic resin composition applied on a base material with light, and a surface of the acrylic resin composition is cured by applying ultraviolet (UV) energy. In this case, the surface curing imparts a fixing force to such an extent that the entire applied composition is not cured, thereby allowing wrinkles to be formed through a step to be described below and preventing the applied composition from flowing down.

In the present specification, the first light irradiation step may be performed in an oxygen atmosphere, an air atmosphere, or a nitrogen atmosphere. In this case, the air atmosphere refers to an ambient air atmosphere having an oxygen concentration of about 21%, that is, a natural air state without artificial treatment, the oxygen atmosphere refers to an artificial air state in which the oxygen concentration is higher than that in the air atmosphere, and the nitrogen atmosphere refers to an artificial air state in which the nitrogen concentration is higher than that in the air atmosphere containing 78% nitrogen.

To this end, the first light irradiation step may be performed in an air atmosphere using light having a wavelength of 200 nm to 400 nm and high energy. Specifically, the first light irradiation step may be performed by irradiating with light having a wavelength of 250 to 380 nm, 280 to 380 nm, 250 to 350 nm, or 280 to 320 nm under an air condition. In this case, a surface temperature of the semicured composition and/or the cured layer may be from 20 to 90°C, specifically from 20 to 80°C or from 30 to 70°C.

For the light source used in the first light irradiation step, a light source that emits light of a broad wavelength band that emits all or part of light within a range of 100 to 450 nm is used. When a light source of a broad wavelength band is used as described above, surface curing can be more easily controlled. For example, a metal halide lamp having an emission spectrum of a broad wavelength band within a range of 100 to 450 nm may be used.

On the other hand, if the first light irradiation step is performed using a light source of a narrow wavelength band within a long-wavelength (365 nm to 405 nm) region of UV, such as an LED, wrinkles are formed in a pointed shape, so that contaminants are more easily fixed to the surface treatment layer, and stain resistance may be reduced.

In addition, in the first light irradiation step, a distance between the acrylic resin composition and the light source may be from 5 to 150 mm, specifically from 5 to 140 mm, from 5 to 130 mm, from 5 to 120 mm, from 5 to 110 mm, from 5 to 100 mm, from 5 to 80 mm, from 5 to 60 mm, from 5 to 40 mm, from 10 to 70 mm, from 10 to 50 mm, from 10 to 30 mm, from 20 to 80 mm, from 20 to 60 mm, from 20 to 50 mm, from 20 to 30 mm, from 25 to 75 mm, from 50 to 80 mm, from 40 to 60 mm, or from 45 to 55 mm. When the distance between the surface treatment layer and the light source is satisfied, appropriate curing is achieved without over-curing, and thus gloss of the surface may decrease, and when the distance condition is not satisfied, over-curing is caused, and thus gloss may increase.

Furthermore, in the first light irradiation step, a light irradiation amount may be from 25 mJ/cm² to 150 mJ/cm², specifically, from 25 mJ/cm² to 120 mJ/cm², from 25 mJ/cm² to 100 mJ/cm², from 25 mJ/cm² to 90 mJ/cm², from 25 mJ/cm² to 75 mJ/cm², from 25 mJ/cm² to 70 mJ/cm², from 25 mJ/cm² to 50 mJ/cm², from 50 mJ/cm² to 75 mJ/cm², from 40 mJ/cm² to 60 mJ/cm², from 25 mJ/cm² to 45 mJ/cm², from 35 mJ/cm² to 45 mJ/cm², or from 38 mJ/cm² to 43 mJ/cm².

When the same light source is used, as a distance of the light source from the composition and/or the surface treatment layer increases, the light amount decreases, and as the distance of the light source from the composition and/or the surface treatment layer decreases, the light amount increases. Therefore, to control the light amount irradiated onto the composition and/or the surface treatment layer, not only the light amount of the light source itself but also a change in the light amount depending on the distance should be considered.

In addition, the second light irradiation step is a step of increasing a scattering rate of light incident on the surface by causing the surface of the applied acrylic resin composition and/or a cured product thereof to be contracted by an excimer generated by the irradiated light, thereby forming wrinkles. The present invention can increase a scattering rate of light by contracting a surface of an acrylic resin composition and/or a cured product thereof into a radial irregular structure described above using an excimer, and thus can reduce gloss of the cured layer even with a very small amount of a matting agent or, in some cases, even without using a matting agent. The second light irradiation step may be performed by irradiating with light having a wavelength of 200 nm or less, specifically 190 nm or less, 180 nm or less, 170 nm or less, 160 nm or less, 150 nm or less, 140 nm or less, 130 nm or less, 120 nm or less, 110 nm or less, or 100 nm or less, and 130 nm or more, 140 nm or more, 150 nm or more, 160 nm or more, or 170 nm or more, in an inert atmosphere. A gas used to create the inert atmosphere may be, for example, He, Ne, Ar, and/or N₂.

The inert atmosphere in which the second light irradiation step is performed may be an atmosphere in which a concentration of oxygen (O₂) is about 4,000 ppm or less. Specifically, an upper limit of the concentration of oxygen in the inert atmosphere may be 3,000 ppm or less, 2,500 ppm or less, 2,000 ppm or less, 1,500 ppm or less, or 1,000 ppm or less, and more specifically, 900 ppm or less, 800 ppm or less, 700 ppm or less, 600 ppm or less, 500 ppm or less, 400 ppm or less, or 300 ppm or less. Additionally, a lower limit thereof may be, for example, 50 ppm or more, 100 ppm or more, 200 ppm or more, 300 ppm or more, 400 ppm or more, 500 ppm or more, 600 ppm or more, 700 ppm or more, 800 ppm or more, 900 ppm or more, or 1,000 ppm or more.

In an example, the inert atmosphere may be formed such that the concentration of oxygen in nitrogen gas (N₂) falls within the specific range.

When the second light irradiation is performed under the inert atmosphere condition as described above, it is advantageous for securing the wrinkles and surface characteristics described above. For example, if the second light irradiation is performed in an inert atmosphere where the concentration of oxygen exceeds the specific range, the formation of wrinkles as described above becomes difficult, and the surface characteristics described above cannot be provided. For example, wrinkles are not formed uniformly over the entire surface area so as to satisfy the characteristics described above, but may be sparsely observed on the surface.

In an example, when the second light irradiation step is performed, a distance between the composition and the light source, that is, a distance from the surface of the composition applied on the base material layer to the light source may be 5 mm or more. Specifically, a lower limit of the distance may be, for example, 10 mm or more, 15 mm or more, 20 mm or more, 25 mm or more, 30 mm or more, 35 mm or more, 40 mm or more, 45 mm or more, or 50 mm or more, and an upper limit thereof may be, for example, 150 mm or less, 130 mm or less, 110 mm or less, 100 mm or less, 90 mm or less, 85 mm or less, 80 mm or less, 75 mm or less, 70 mm or less, 65 mm or less, 60 mm or less, 55 mm or less, or 50 mm or less. In the second light irradiation step, when the distance between the composition and the light source is adjusted to the above range, an appropriate amount of light can reach the composition with an appropriate intensity, which, as a result, is advantageous for forming a surface with wrinkles of the above shape and size and securing surface characteristics (for example, surface profile and gloss) of the above-described levels.

In an example, an amount of light irradiated in the second light irradiation step may be 1 mJ/cm² or more or 5 mJ/cm² or more. Specifically, a lower limit of the light irradiation amount in the second light irradiation step may be, for example, 10 mJ/cm² or more, 15 mJ/cm² or more, 20 mJ/cm² or more, 25 mJ/cm² or more, or 30 mJ/cm² or more, and an upper limit thereof may be, for example, 150 mJ/cm² or less, 120 mJ/cm² or less, 110 mJ/cm² or less, 100 mJ/cm² or less, 90 mJ/cm² or less, 80 mJ/cm² or less, 70 mJ/cm² or less, 60 mJ/cm² or less, 50 mJ/cm² or less, 40 mJ/cm² or less, 30 mJ/cm² or less, or 25 mJ/cm² or less. In the second light irradiation step, when the light irradiation amount is adjusted to the above range, it is advantageous for forming a surface with wrinkles formed as described above and securing surface characteristics (for example, surface profile and gloss) of the above-described levels.

In the present specification, the third light irradiation step may be performed in an oxygen atmosphere, an air atmosphere, or a nitrogen atmosphere. In this case, the air atmosphere refers to an ambient air atmosphere having an oxygen concentration of about 21%, that is, a natural air state without artificial treatment, the oxygen atmosphere refers to an artificial air state in which the oxygen concentration is higher than that in the air atmosphere, and the nitrogen atmosphere refers to an artificial air state in which the nitrogen concentration is higher than that in the air atmosphere containing 78% nitrogen. When the third light irradiation step is performed in a nitrogen atmosphere, it may be performed in a nitrogen (N₂) atmosphere containing a small amount of oxygen (O₂).

In addition, the third light irradiation step is a step of performing complete curing by additionally irradiating the composition and/or cured layer having wrinkles formed thereon with ultraviolet (UV) light, and may be performed in an air atmosphere using light having a wavelength of 400 nm or less, specifically 100 to 400 nm, 200 to 400 nm, 200 to 300 nm, 300 to 400 nm, 150 to 300 nm, 200 to 250 nm, or 270 to 320 nm.

Furthermore, the light irradiation amount in the third light irradiation step may be 25 mJ/cm² to 400 mJ/cm², specifically 25 mJ/cm² to 3500 mJ/cm², 25 mJ/cm² to 300 mJ/cm², 25 mJ/cm² to 250 mJ/cm², 25 mJ/cm² to 200 mJ/cm², 25 mJ/cm² to 150 mJ/cm², 25 mJ/cm² to 120 mJ/cm², 25 mJ/cm² to 100 mJ/cm², 25 mJ/cm² to 90 mJ/cm², 25 mJ/cm² to 75 mJ/cm², 25 mJ/cm² to 70 mJ/cm², 25 mJ/cm² to 50 mJ/cm², 50 mJ/cm² to 75 mJ/cm², 40 mJ/cm² to 60 mJ/cm², 25 mJ/cm² to 45 mJ/cm², 35 mJ/cm² to 45 mJ/cm², or 38 mJ/cm² to 43 mJ/cm².

As an example, the third light irradiation step may be performed by irradiating the composition and/or cured layer with light having a broad wavelength of 200 to 400 nm at a light irradiation amount of 60 to 90 mJ/cm². In this case, the distance between the composition and/or cured layer and the light source may be 50±10 mm or 100±10 mm.

The light irradiated in the present invention may be irradiated according to a known method capable of irradiating light having a wavelength required in each step. For example, light having a broad wavelength band in a UV region of 400 nm or less may be irradiated using a mercury lamp, a gallium lamp, or a metal halide lamp. In this case, mercury is a light source having a maximum emission wavelength (λmax) in the upper 200 nm range, gallium is a light source having a maximum emission wavelength (λmax) within a range of 350 nm to 450 nm, and metal halide is a light source having a maximum emission wavelength (λmax) within a range of 300 nm to 399 nm.

In addition, the light irradiation time in the present invention may be a very short time of 1 to 2 seconds, and such a light irradiation time may be controlled by a moving speed of the composition during light irradiation, for example, a moving speed of the composition coated on a base material. For example, a moving speed of the composition and/or a base material coated with the composition may be from 1 to 50 m/min, specifically from 5 to 40 m/min, from 10 to 40 m/min, from 20 to 40 m/min, from 30 to 40 m/min, from 15 to 25 m/min, from 5 to 15 m/min, from 15 to 20 m/min, from 35 to 40 m/min, or from 18 to 22 m/min.

The present invention can exhibit a high curing rate even when the initiator is included in a small amount within the specific range, by stepwise applying short-wavelength light in a specific range under different conditions during curing of the composition.

Note that the acrylic resin composition used to form the cured layer may include a monofunctional acrylic monomer and a polyfunctional acrylic oligomer. Here, the monofunctional acrylic monomer can lower the viscosity of the composition, thereby improving processability such as transfer, handling, and application (coating) of the composition. The acrylic resin composition used to form the cured layer should maintain a viscosity suitable for the process, and preferably, the viscosity of the acrylic resin composition may be 100 cP to 1000 cP, 100 cP to 950 cP, 100 cP to 900 cP, 100 cP to 850 cP, or 150 cP to 850 cP at room temperature. Here, room temperature refers to a natural ambient temperature without heating or cooling, and is, for example, 20±5°C.

Additionally, the acrylic resin composition may further include at least one of a polyfunctional acrylic monomer, a silicon-based acrylic oligomer, a matting agent, and a flexibilizing agent.

In another example relating to the present application, the present application relates to a decorative film or decorative sheet including the laminated film. The decorative film may be used for decorative materials, furniture, and the like. The furniture or the decorative materials may have curved portions, edges, and/or flat surfaces.

Examples of the furniture include a door, a desk, a chair, or a shelf, and the decorative materials may refer to articles that encompass items that may be used as part of the furniture or used alone.

In another example relating to the present application, the present application relates to a coating treatment agent, i.e., a composition, capable of providing a cured layer of the laminated film as described above. The specific composition of the composition is as described above.

Below, the present specification will be described in more detail through examples. However, the following examples are only for illustrating the present specification and are not intended to limit the present specification.

### <Preparation Example>

A monofunctional acrylic monomer, a polyfunctional acrylic monomer, a polyfunctional acrylic oligomer (Mw: 7,000±10), an oligomer having a silicon-containing functional group (Mw: 3,000±10), and a silicon-based additive were mixed together with an initiator as shown in Tables 1 and 2 to prepare a solvent-free acrylic resin composition. The contents in Tables 1 and 2 are parts by weight.

**[Table 1]**

| | Preparation Example 1 | Preparation Example 2 | Preparation Example 3 | Preparation Example 4 | Preparation Example 5 |
|---|---|---|---|---|---|
| Monofunctional acrylic monomer | 20 | 50 | 32 | 32 | 32 |
| polyfunctional acrylic monomer | 25 | - | 18 | 18 | 23 |
| Acrylic oligomer having silicon-containing functional group | 5 | - | - | - | - |
| Polyfunctional acrylic oligomer | 55 | 50 | 50 | 50 | 45 |
| Silicon-based additive | - | - | 5 | 4 | 4 |
| Initiator | 5 | 5 | 5 | 5 | 5 |

**[Table 2]**

| | Preparation Example 6 | Preparation Example 7 | Preparation Example 8 | Preparation Example 9 |
|---|---|---|---|---|
| Monofunctional acrylic monomer | 10 | 60 | 20 | 40 |
| polyfunctional acrylic monomer | 40 | | 10 | 30 |
| Acrylic oligomer having silicon-containing functional group | - | - | - | - |
| Polyfunctional acrylic oligomer | 50 | 40 | 70 | 30 |
| Silicon-based additive | 5 | 5 | 5 | 5 |
| Irgacure 754 | 5 | 5 | 5 | 5 |

### Example

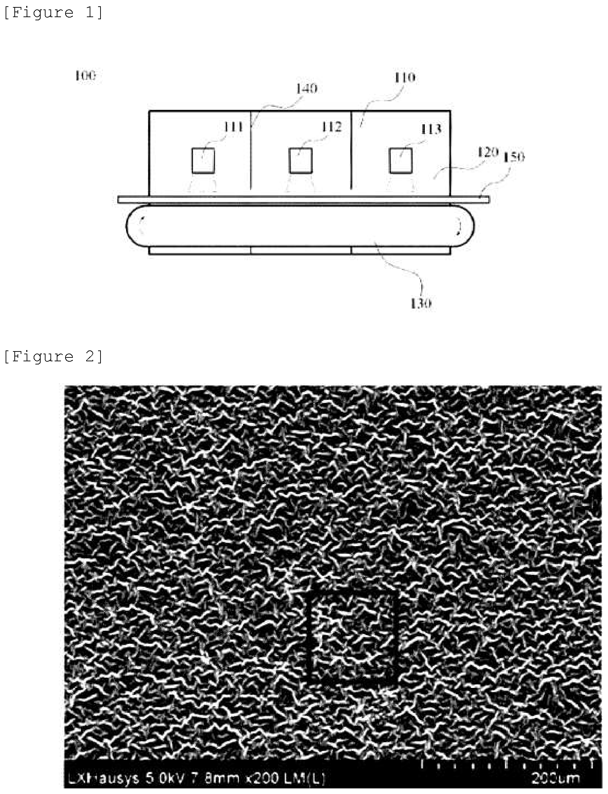

An acrylic resin composition prepared in Table 4 was applied onto a polyvinyl chloride (PVC) base material having a size of 10 cm × 10 cm (average thickness: 0.20 to 0.45T), and the base material was fixed to a photocuring apparatus having a structure as shown in FIG. 1. Thereafter, as shown in Table 3, light irradiation was performed stepwise while moving the base material at a speed of 20±1 m/min to prepare a decorative film specimen. In this case, an average thickness of the cured layer was 8 to 15 µm. In Table 3, a light source used for the first light irradiation was a mercury lamp emitting broad-wave light having an emission spectrum of 200 to 400 nm, and irradiation was performed at a light irradiation amount of 60 to 90 mJ/cm².

A light source used for the third light irradiation was a mercury lamp emitting broad-wave light having an emission spectrum of 200 to 400 nm, and irradiation was performed at a light irradiation amount of 300 mJ/cm².

**[Table 3]**

| | | Curing condition 1 | Curing condition 2 |
|---|---|---|---|
| | | 3step | 2step |
| First light irradiation | Wavelength range | 200 to 400 nm | 200 nm or less |
| | Gas condition | Air condition | Inert gas |
| | Distance from light source | 50±1 mm | 100±1 mm |
| Second light irradiation | Wavelength range | 172±5 nm | 200 to 400 nm |
| | Gas condition | Nitrogen atmosphere with oxygen concentration of 400 ppm or | - |
| | | less | |
| | Distance from light source | 100±1 mm | 100±1 mm |
| Third light irradiation | Wavelength range | 200 to 400 nm | - |
| | Gas condition | Air condition | - |
| | Distance from light source | 100±1 mm | |

### Comparative Example

A decorative film specimen was prepared by performing the same method as in the Example, except that the composition was cured using an acrylic composition and curing conditions as shown in Tables 5 to 7 below. In this case, an average thickness of the cured layer was 8 to 15 µm.

### [Experimental Example 1]

In order to evaluate physical properties of the decorative film according to the present invention, surface profile, gloss, and tactile properties were measured for specimens prepared in Examples 1 to 5 and Comparative Examples 1 to 5. Specific measurement methods were as follows, and the measured results are shown in Tables 4 to 7 below.

### a) Evaluation of Surface Profile

The arithmetic average roughness Ra and the ten point average roughness Rz according to ISO 4287 were measured using a surface profile measuring instrument (model: 178-560-02K Model, manufacturer: Mistutoyo Co.).

### b) Gloss Evaluation

For the specimens of the Examples and Comparative Examples, 60° gloss (60° gloss condition) and 85° gloss (85° gloss condition) were measured using a gloss meter.

**[Table 4]**

| | Example 1 | Example 2 | Example 3 | Example 4 | Example 5 |
|---|---|---|---|---|---|
| Type of acrylic composition | Preparation Example 1 | Preparation Example 2 | Preparation Example 3 | Preparation Example 4 | Preparation Example 5 |
| Curing condition | Curing condition 1 | Curing condition 1 | Curing condition 1 | Curing condition 1 | Curing condition 1 |
| Gloss (60°) | 5.2 | 4.0 | 3.2 | 8.9 | 8.5 |
| Gloss (85°) | 46.2 | 37.3 | 35.4 | 48.1 | 48.6 |
| Rz (µm) | 2.8 | 1.8 | 2.0 | 2.6 | 2.7 |
| Ra (µm) | 0.39 | 0.23 | 0.29 | 0.35 | 0.38 |
| Rz/Ra | 7.18 | 7.83 | 6.90 | 7.43 | 7.11 |

**[Table 5]**

| | Comparative Example 1 | Comparative Example 2 | Comparative Example 3 | Comparative Example 4 | Comparative Example 5 |
|---|---|---|---|---|---|
| Type of acrylic composition | Preparation Example 1 | Preparation Example 2 | Preparation Example 3 | Preparation Example 4 | Preparation Example 5 |
| Curing condition | Curing condition 2 | Curing condition 2 | Curing condition 2 | Curing condition 2 | Curing condition 2 |
| Gloss (60°) | 5.2 | 4.7 | 2.9 | 9.9 | 9.7 |
| Gloss (85°) | 7.9 | 7.1 | 3.3 | 14.8 | 13.1 |
| Rz (µm) | 11.7 | 13.5 | 10.3 | 10.4 | 11.5 |
| Ra (µm) | 1.62 | 2.00 | 1.54 | 1.43 | 1.64 |
| Rz/Ra | 7.22 | 6.75 | 6.69 | 7.27 | 7.01 |

**[Table 6]**

| | Comparative Example 6 | Comparative Example 7 | Comparative Example 8 | Comparative Example 9 |
|---|---|---|---|---|
| Type of acrylic composition | Preparation Example 6 | Preparation Example 7 | Preparation Example 8 | Preparation Example 9 |
| Curing condition | Curing condition 2 | Curing condition 2 | Curing condition 2 | Curing condition 2 |
| Gloss (60°) | 8.5 | Uncured | 9.4 | 7.1 |
| Gloss (85°) | 15.5 | | 18.2 | 10.2 |
| Rz (µm) | 17.5 | | 22.9 | 15.5 |
| Ra (µm) | 4.2 | | 5.6 | 3.8 |
| Rz/Ra | 4.17 | | 4.09 | 4.08 |

**[Table 7]**

| | Comparative Example 10 | Comparative Example 11 | Comparative Example 12 | Comparative Example 13 |
|---|---|---|---|---|
| Type of acrylic composition | Preparation Example 6 | Preparation Example 7 | Preparation Example 8 | Preparation Example 9 |
| Curing condition | Curing condition 1 | Curing condition 1 | Curing condition 1 | Curing condition 1 |
| Gloss (60°) | 5.5 | Uncured | 5.8 | 5.7 |
| Gloss (85°) | 20.2 | | 20.0 | 18.7 |
| Rz (µm) | 4.3 | | 4.5 | 3.9 |
| Ra (µm) | 1.5 | | 1.8 | 1.1 |
| Rz/Ra | 2.87 | | 2.50 | 3.55 |

With respect to gloss, in Comparative Examples 1 to 9, the 60° gloss is 15 or less and the 85° gloss is less than 20, so that the surface is matte and exhibits rough tactile properties and a bumpy appearance visible to the naked eye. In the Examples, the 60° gloss is 15 or less and the 85° gloss is 20 or more, so that the surface is matte while exhibiting smooth tactile properties.

With respect to surface profile, in the Examples, both Rz and Ra values decrease compared to those in the Comparative Examples, and Ra value decreases to a greater extent, and thus it was confirmed that the Rz/Ra value tends to increase compared to the conventional condition.

### [Experimental Example 2]

In order to confirm a surface structure of a cured layer, which is the outermost layer of the decorative film according to an exemplary embodiment of the present invention, scanning electron microscope (SEM) analysis was performed at 200x magnification for the decorative film specimens prepared in Examples 3 and 5 and Comparative Examples 3 and 5, and the results are shown in FIGS. 2 to 5. The squares shown in FIGS. 2 to 5 indicate a unit area (0.1 × 0.1 mm) for counting the number of wrinkles.

As shown in FIG. 2, a wrinkle structure of Example 3 had an average width of 3 to 8 µm and a length of about 5 to 30 µm. In addition, the wrinkles were formed very uniformly, and 10 to 30 wrinkles were formed per unit area (0.1 × 0.1 mm).

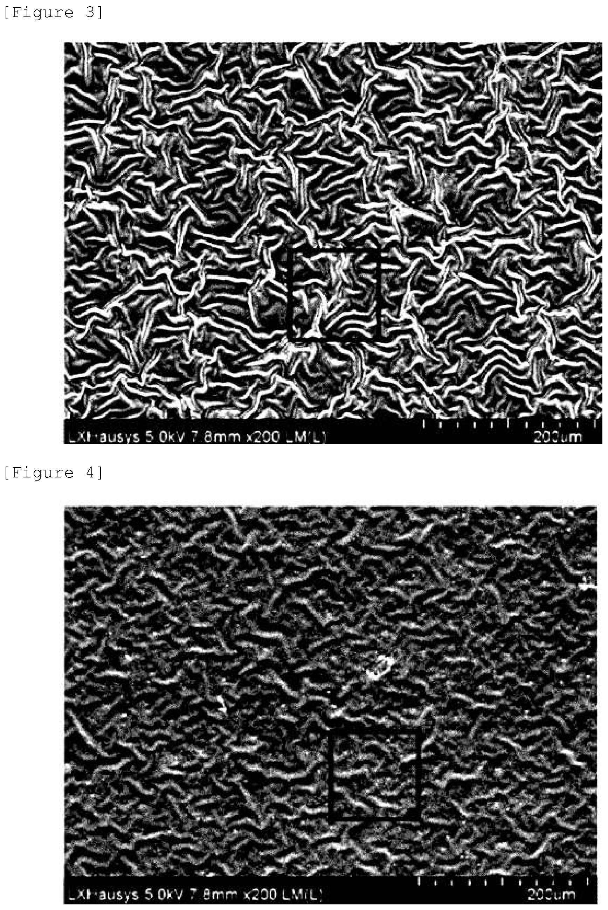

As shown in FIG. 3, a wrinkle structure of Comparative Example 3 had an average width of 7 to 12 µm and a length of about 20 to 100 µm. In addition, the wrinkles were formed uniformly, and 5 to 10 wrinkles were formed per unit area (0.1 × 0.1 mm).

As shown in FIG. 4, a wrinkle structure of Example 5 had an average width of 1 to 5 µm and a length of about 3 to 20 µm. In addition, the wrinkles were formed very uniformly, and 20 to 50 wrinkles were formed per unit area (0.1 × 0.1 mm).

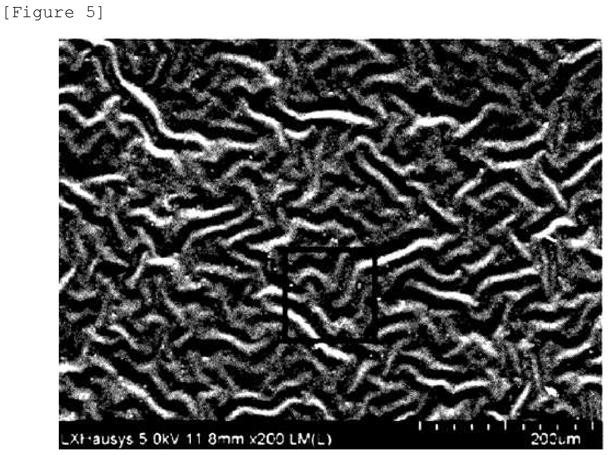

As shown in FIG. 5, a wrinkle structure of Comparative Example 5 had an average width of 5 to 10 µm and a length of about 20 to 100 µm. In addition, the wrinkles were formed uniformly, and 5 to 20 wrinkles were formed per unit area (0.1 × 0.1 mm).

## Claims

1. A decorative film comprising:
a base material; and
a cured layer having a surface structure comprising a wrinkle, on the base material,
wherein the cured layer has an Rz of 5 µm or less, an Ra of 1 µm or less, and an Rz/Ra of 5 to 20.

2. The decorative film of claim 1, wherein the cured layer has a surface gloss of 15 or less under a 60° gloss condition, and a surface gloss of 20 or more under an 85° gloss condition.

3. The decorative film of claim 1, wherein the cured layer comprises 5 to 100 wrinkles per unit area (0.1 mm × 0.1 mm) of a surface.

4. A method for manufacturing a decorative film, the method comprising:
a first light irradiation step of irradiating an acrylic resin composition coated on a base material with light having a wavelength of 200 nm to 400 nm under an air condition to cure a surface of the composition;
a second light irradiation step of irradiating a surface of the surface-cured composition with light having a wavelength of 200 nm or less under an inert gas condition to induce wrinkles on the surface; and
a third light irradiation step of irradiating the composition having the wrinkles induced on the surface thereof with light having a wavelength of 200 nm to 400 nm to photocure the composition to form a cured layer,
wherein the cured layer has an Rz of 5 µm or less, an Ra of 1 µm or less, and an Ra/Rz of 5 to 20.

5. The method of claim 4, wherein the acrylic resin composition comprises,
20 to 50 parts by weight of a monofunctional acrylic monomer, and
40 parts by weight or more and less than 70 parts by weight of a polyfunctional acrylic oligomer.

6. The method of claim 5, wherein the acrylic resin composition further comprises at least one of
5 to 30 parts by weight of a polyfunctional acrylic monomer, and
2 parts by weight or more and 10 parts by weight or less of a silicon-based acrylic oligomer.
